Europäisches Patentamt

European Patent Office

Office européen des brevets

(19)

(11) Numéro de publication: **0 378 451**
**A1**

(12) # DEMANDE DE BREVET EUROPEEN

(21) Numéro de dépôt: **90400010.6**

(22) Date de dépôt: **03.01.90**

(51) Int. Cl.⁵: **C02F 1/28, B01J 20/34, C01B 31/08**

(30) Priorité: **13.01.89 FR 8900380**

(43) Date de publication de la demande:
**18.07.90 Bulletin 90/29**

(84) Etats contractants désignés:
**AT BE CH DE DK ES FR GB GR IT LI LU NL SE**

(71) Demandeur: **ATOCHEM**
**4 & 8, Cours Michelet La Défense 10**
**F-92800 Puteaux(FR)**

(72) Inventeur: **Suty, Hervé**
**10 Boulevard de Polangis**
**F-94500 Champigny sur Marne(FR)**
Inventeur: **Thebault, Guy**
**42 Rue de Paris**
**F-93260 Les Lilas(FR)**

(54) **Composition détartrante pour charbon actif à base d'acide sulfamique, procédé de détartrage mettant en oeuvre cette composition.**

(57) La présente invention concerne une composition détartrante pour charbon actif à base d'acide sulfamique.
L'invention a également pour objet un procédé de détartrage mettant en oeuvre cette composition sous forme de solution aqueuse.

EP 0 378 451 A1

# COMPOSITION DETARTRANTE POUR CHARBON ACTIF A BASE D'ACIDE SULFAMIQUE, PROCEDE DE DETARTRAGE METTANT EN OEUVRE CETTE COMPOSITION.

La présente invention concerne une composition détartrante pour charbon actif à base d'acide sulfamique.

Dans le brevet BP 258 216, on a décrit une composition de détartrage comprenant un acide carboxylique aliphatique α-hydroxylé et un épaississeur utilisé pour éliminer les dépôts de tartre formés sur des surfaces en contact avec de l'eau.

Dans le brevet européen EP 255 914, on a décrit l'utilisation d'un champ magnétique pour détartrer des conduites d'eau.

L'utilisation de charbon actif est largement répandue dans le domaine du traitement des eaux où il assure une élimination des matières organiques.

Mais, le contact avec des eaux plus ou moins calcaires par exemple conduit à l'entartrage des pores du charbon actif diminuant ainsi sa surface spécifique et par là même son activité.

Le tartre, notamment celui véhiculé par les eaux (eaux industrielles, eaux potables...) renferme un certain nombre de sels parmi lesquels on peut citer :

- le carbonate de calcium (constituant principal du calcaire)
- le carbonate de magnésium
- l'hydroxyde de magnésium
- l'oxalate de calcium
- le sulfate de calcium
- la silice
- divers oxydes métalliques
- des matières organiques

Il se dépose sur les objets en couche d'épaisseur croissante pouvant atteindre quelques millimètres, voire quelques centimètres.

La composition détartrante mise au point par la demanderesse se présente sous forme solide et est constituée essentiellement d'acide sulfamique et de préférence d'au moins 95 % en poids d'acide sulfamique.

L'acide sulfamique est un acide fort en solution aqueuse ; il est non-volatil, non-hygroscopique et ne dégage pas de vapeurs toxiques (chlorées, nitreuses).

Lorsqu'il réagit avec le tartre, il conduit en général à des produits solubles dans l'eau, ce qui permet un rinçage et une élimination facile et minimise la redéposition des solides dissouts.

Il est également moins corrosif que la plupart des acides forts vis-à-vis des matériaux de construction.

La composition détartrante selon l'invention peut également contenir divers additifs tels que des agents inhibiteurs de corrosion, des agents de mouillants, des agents anti-mottant...

Parmi les agents inhibiteurs de corrosion, on peut citer l'hexaméthylène tétramine, le formaldéhyde, la glycérine, le glucose.

Parmi les agents mouillants, on peut citer le polyéthylène glycol, des agents tensio-actifs.

Parmi les agents anti-mottant, on peut citer le carbonate de magnésium, le silico-aluminate.

Le procédé de détartrage mis au point par la demanderesse consiste à immerger le charbon actif "entartré" dans une solution aqueuse contenant la composition selon l'invention pendant une durée déterminée. On préfère en général utiliser des solutions aqueuses contenant moins de 10 % en poids d'acide sulfamique.

Lorsque le tartre est constitué essentiellement de carbonate de calcium, par exemple de calcaire, la quantité d'acide sulfamique que l'on met en oeuvre est de préférence telle que le rapport molaire $H_2NSO_3/Ca^{2+}$ est compris entre 0,5 et 4 et mieux entre 1,5 et 3.

Afin d'assurer le contact le plus intime possible entre l'acide sulfamique et les particules de charbon actif entartré, il est recommandé d'agiter ou de brasser le mélange précédent. Pour cela on peut utiliser un système d'agitation mécanique, le barbotage d'un gaz dans le mélange, comme par exemple de l'air comprimé.

Afin de déterminer la durée d'immersion qui est nécessaire pour éliminer quantitativement le tartre déposé sur le charbon actif, on peut suivre l'évolution du pH du mélange au cours du temps.

On mesure le pH de la suspension contenant l'acide sulfamique à intervalles réguliers (par exemple 30 minutes ou une heure) depuis l'introduction du charbon actif dans la solution contenant la composition de détartrage selon l'invention.

Le pH croît tant que l'acide sulfamique continue à attaquer le tartre déposé puis se stabilise lorsque la réaction est terminée.

On sépare ensuite le charbon actif "détartré" de la suspension contenant la composition à base d'acide sulfamique, en le filtrant par exemple.

Puis on le rince, avec de l'eau par exemple, afin d'éliminer toute trace d'acidité qui pourrait s'avérer néfaste lors de l'utilisation ultérieure du charbon actif.

Le charbon détartré obtenu peut être utilisé pour le même type d'applications que du charbon actif "neuf" (avant entartrage) : on ne constate pas de diminution significative de son activité qui serait dûe aux opérations de détartrage selon le procédé de la demanderesse en tant que telles.

Le détartrage selon le procédé mis au point par la demanderesse peut dans la mesure du possible être effectué in situ.

Par exemple, en traitement des eaux, le charbon actif étant souvent placé dans une cuve de béton, il est possible de détartrer directement dans la cuve de béton.

Le procédé de détartrage selon l'invention est également une méthode de pré-traitement du charbon actif avant régénération thermique.

La régénération thermique du charbon qui a perdu de son activité nécessite en général un chauffage pouvant atteindre 800 à 900°C, donc très coûteux en énergie.

Grâce à un pré-traitement consistant en un détartrage à l'aide d'une composition à base d'acide sulfamique conforme à l'invention, qui permet d'éliminer les sels de calcium déposés sur les grains de charbon actif, la régénération thermique du charbon actif est optimisée.

Les exemples suivants illustrent l'invention sans toutefois la limiter.

## EXEMPLE 1

| A - COMPOSITION DETARTRANTE (CONFORME A L'INVENTION) | |
|---|---|
| La composition détartrante comprend (en grammes) : | |
| - acide sulfamique | 98 |
| - agent inhibiteur de corrosion | 1 |
| - agent anti-mottant | 1 |

## B - MISE EN OEUVRE

Dans un bécher de 250 ml, on introduit 50g de charbon actif entartré que l'on a prélevé en station d'eau potable.

Les résultats des analyses montrent que le tartre déposé est essentiellement constitué de carbonate de calcium et indiquent un taux de calcium résiduel égal à 0,8 % du poids total de charbon actif entartré.

On ajoute alors la composition définie sous A en quantité telle que le rapport molaire $H_2NSO_3H/Ca^{2+}$ est égal à 3. La composition est ajoutée sous forme d'une solution aqueuse contenant de 2,5 % en poids de ladite composition.

Le mélange ainsi obtenu est placé sous barbotage d'air comprimé à température ambiante.

On effectue des prélèvements du mélange à des intervalles de temps de contact mesurés à partir de l'introduction de la solution aqueuse. Les échantillons sont soigneusement lavés à l'eau jusqu'à élimination complète de l'acidité puis séchés en étuve à 120°C.

Au bout de 7 heures de temps de contact du charbon actif usagé et de la composition en solution, on note que 90 % en poids du calcium a été éliminé.

## EXEMPLE 2

On procède au détartrage d'un charbon actif entartré employé en station d'eau potable (taux de calcium = 1,81 %) dans les mêmes conditions opératoires que celles décrites dans l'EXEMPLE 1.

Le charbon actif neuf a un indice d'iode de 138 et un taux de calcium résiduel égal à 0,2 %.

A des intervalles de temps de contact comptés depuis l'introduction de la solution aqueuse sur le charbon entartré, on effectue des prélèvements du mélange dont on mesure le taux de calcium, le pH, l'indice d'iode.

Le taux de calcium résiduel est mesuré après extraction sélective à l'acide chlorhydrique à chaud par absorption atomique.

L'indice d'iode est mesuré selon la méthode décrite ci-dessous et mise au point par la demanderesse.

On sèche 200 ± 0,1mg de charbon actif que l'on vient de prélever puis introduit dans un bécher de 100ml préalablement taré. On ajoute 20ml d'une solution d'iode N/5 (constituée pour 1 litre de 40g de KI et de 25,4g de $I_2$), on met en suspension et agite le mélange pendant 4 mn. On filtre le charbon sur filtre Durieux n° 3 bande rouge de 0 = 110 mm en éliminant les 4 ou 5 premiers ml.

On prélève 10 ml du filtrat et titre l'iode en excès par le thiosulfate de sodium N/10 en présence d'amidon. Pour un volume de "n"ml de thiosulfate nécessaire au titrage en retour de l'iode la valeur de l'indice d'iode correspondant à la quantité d'iode en g extraite de la solution initiale et exprimée par rapport à 100 g de charbon sec est donnée par la formule suivante :

$$2\left[\left(\frac{10}{1000} \times \frac{127}{5}\right) - \left(\frac{n}{1000} \times \frac{127}{10}\right)\right]\frac{100}{0,2}$$

ou, plus simplement : 12,7 (20-n)g de $I_2$/100g de charbon actif.

Les résultats sont notés dans le Tableau I.

TABLEAU I

| Solution de détartrage contenant 2,5 % en poids d'acide sulfamique et en quantité telle que le rapport molaire $H_2NSO_3H/Ca^{2+}$ est sensiblement égal à 3. | | | |
|---|---|---|---|
| TEMPS DE CONTACT (h) | 0 | 1 | 3 |
| Ca résiduel (% en poids) | 1,81 | 0,063 | 0,055 |
| taux d'élimination du Ca (réf : temps de contact : 0) | 0 | 96 | 96 |
| Indice d'iode | 77 | 85 | 90 |
| % de régénération en Indice d'iode (réf : temps de contact : 0) | 0 | 10 | 15 |

## EXEMPLE 3

On procède au détartrage d'un charbon actif usagé qui a été employé en station d'eau potable à l'aide d'une composition conforme à l'invention qui comprend (en grammes) :
- acide sulfamique de pureté supérieure à 99 % 100

Le charbon actif neuf a un indice d'iode de 138, un taux de calcium résiduel égal à 0,2 %.

On mesure le taux de calcium, l'indice d'iode de la même façon que dans l'EXEMPLE 1 pour des échantillons dont on fait varier le rapport molaire $H_2NSO_3H/Ca^{2+}$ entre 1,4 et 3 et la concentration de la solution aqueuse en composition à base d'acide sulfsmique entre 2 et 2,5 % en poids.

Les résultats sont notés dans les Tableaux II, III et IV.

## TABLEAU II

Solution de détartrage contenant 2,5 % en poids d'acide sulfamique en quantité telle que le rapport molaire $H_2NSO_3H/Ca^{2+}$ est sensiblement égal à 3.

| TEMPS DE CONTACT (mn) | 0 | 30 | 60 | 120 | 480 |
|---|---|---|---|---|---|
| pH suspension | 1,32 | 2,85 | 2,85 | 2,95 | 3 |
| Ca résiduel (% en poids) | 2,31 | 0,21 | 0,18 | 0,12 | 0,23 |
| Taux d'élimination du Ca (référence : temps de contact : 0) | 0 | 90,9 | 92,9 | 94,8 | 92 |
| Indice d'iode | 77 | - | 81,2 | - | 86,3 |
| % de régénération en Indice d'iode (référence : temps de contact : 0) | 0 | - | 3,94 | - | 12 |

## TABLEAU III

Solution de détartrage contenant 2,5 % en poids d'acide sulfamique en quantité telle que le rapport molaire $H_2NSO_3H/Ca^{2+}$ est sensiblement égal à 1,8.

| TEMPS DE CONTACT (mn) | 0 | 15 | 30 | 45 | 60 | 120 | 360 |
|---|---|---|---|---|---|---|---|
| Ca résiduel % en poids | 2,31 | - | 0,1 | 0,12 | 0,0605 | - | 0,12 |
| Taux d'élimination du Ca | 0 | - | 95,7 | 94,8 | 97,2 | - | 95 |
| Indice d'iode | 77 | - | - | - | - | - | 86,3 |
| % de régénération en Indice d'iode | 0 | - | - | - | - | - | 12 |

## TABLEAU IV

Solution de détartrage contenant 2 %, en poids d'acide sulfamique en quantité telle que le rapport molaire $H_2NSO_3H/Ca^{2+}$ est sensiblement égal à 1,4.

| TEMPS DE CONTACT (mn) | 0 | 15 | 30 | 45 | 60 | 120 | 360 |
|---|---|---|---|---|---|---|---|
| pH suspension | 1,96 | 2,68 | 2,99 | 3,13 | 3,21 | 3,27 | 3,29 |
| Ca résiduel (% en poids) | 2,31 | 0,14 | 0,2 | 0,24 | 0,2 | 0,18 | 0,19 |
| Taux d'élimination du Ca (réf temps de contact 0) | 0 | 93,9 | 91,3 | 89,6 | 91,3 | 92,2 | 91,8 |
| Indice d'iode | 77 | - | 86,3 | - | - | | 86,3 |
| % de régénération en Indice d'iode (réf temps de contact 0) | 0 | - | 12 | - | - | - | 12 |

**Revendications**

1. Composition détartrante pour charbon actif, caractérisée en ce qu'elle est à base d'acide sulfamique et contient de préférence au moins 95 % en poids d'acide sulfamique.

2. Composition détartrante selon la revendication 1, caractérisée en ce qu'elle contient des agents inhibiteurs de corrosion et/ou des agents anti-mottant et/ou des agents mouillants.

3. Procédé de détartrage de charbon actif mettant en oeuvre une composition telle que définie dans la revendication 1 ou 2, caractérisé en ce que le charbon actif "entartré" est mis en contact avec une solution aqueuse contenant ladite composition.

4. Procédé de détartrage de charbon actif selon la revendication 3, caractérisé en ce que la solution aqueuse contient moins de 10 % en poids d'acide sulfamique.

5. Procédé de détartrage de charbon actif entartré essentiellement par du carbonate de calcium et selon la revendication 3 ou 4, caractérisé en ce que la quantité d'acide sulfamique mise en oeuvre est telle que le rapport molaire $H_2NSO_3H/Ca^{2+}$ est compris entre 0,5 et 4 et de préférence entre 1,5 et 3.

6. Charbon actif détartré à l'aide d'une composition de détartrage telle que définie à la revendication 1 ou 2 et de préférence selon le procédé tel que défini à la revendication 3,4 ou 5.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-4 169 812  (D.W. SMITH)<br>* Colonne 1, lignes 37-63 *<br>--- | 1,4 | C 02 F   1/28<br>B 01 J   20/34<br>C 01 B   31/08 |
| A | FR-A-1 290 665  (CARBONISATION ET CHARBONS ACTIFS)<br>----- | 4 | |

**DOMAINES TECHNIQUES RECHERCHES (Int. Cl.5)**

C 02 F
C 01 B

Le présent rapport a été établi pour toutes les revendications

| Lieu de la recherche | Date d'achèvement de la recherche | Examinateur |
|---|---|---|
| LA HAYE | 21-03-1990 | GONZALEZ Y ARIAS M.L. |

EPO FORM 1503 03.82 (P0402)